(19) Europäisches Patentamt / European Patent Office / Office européen des brevets

(11) **EP 3 679 424 B1**

(12) **FASCICULE DE BREVET EUROPEEN**

(45) Date de publication et mention de la délivrance du brevet:
**25.10.2023 Bulletin 2023/43**

(21) Numéro de dépôt: **18759975.8**

(22) Date de dépôt: **04.09.2018**

(51) Classification Internationale des Brevets (IPC):
**G02F 1/35** *(2006.01)* **G02F 1/39** *(2006.01)*

(52) Classification Coopérative des Brevets (CPC):
**G02F 1/353; G02F 1/3534; G02F 1/39;**
G02F 1/3542

(86) Numéro de dépôt international:
**PCT/EP2018/073773**

(87) Numéro de publication internationale:
**WO 2019/048435 (14.03.2019 Gazette 2019/11)**

(54) **SYSTÈME DE CONVERSION DE FRÉQUENCE AMÉLIORÉ**

VERBESSERTES FREQUENZUMWANDLUNGSSYSTEM

IMPROVED FREQUENCY CONVERSION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.09.2017 FR 1700901**

(43) Date de publication de la demande:
**15.07.2020 Bulletin 2020/29**

(73) Titulaire: **Thales**
**92400 Courbevoie (FR)**

(72) Inventeurs:
• **DEMUR, Romain**
**94250 Gentilly (FR)**
• **LALLIER, Eric**
**94230 Cachan (FR)**

• **GRISARD, Arnaud**
**91767 Palaiseau Cedex (FR)**
• **MORVAN, Loïc**
**91767 Palaiseau Cedex (FR)**

(74) Mandataire: **Atout PI Laplace**
**Immeuble "Visium"**
**22, avenue Aristide Briand**
**94117 Arcueil Cedex (FR)**

(56) Documents cités:
WO-A1-2014/051573      JP-A- 2008 224 932
US-A- 5 291 503        US-A- 5 321 718
US-A- 5 345 457        US-A1- 2004 201 905
US-A1- 2011 170 172

**Description**

## DOMAINE DE L'INVENTION

Le domaine de l'invention est celui des convertisseurs de fréquence optique par le biais d'effets non linéaires dans des matériaux spécifiques.

Par exemple on peut améliorer la performance des détecteurs IR, typiquement pour l'observation de scènes sous illumination active, par génération, à partir d'un faisceau signal IR, d'un faisceau converti présentant une longueur d'onde diminuée (soit une fréquence augmentée) pour lesquelles les détecteurs sont plus performants. Les applications sont la télémétrie, le LIDAR ou encore la spectroscopie.

## ETAT DE LA TECHNIQUE

De nombreuses applications de détection mettent à profit les propriétés optiques de l'atmosphère dans les fenêtres de l'infrarouge qui offrent une transparence importante et des conditions de propagation compatibles avec la sécurité oculaire. D'importantes étapes ont été franchies depuis peu dans le domaine des sources laser en termes de puissance et de longueurs d'onde accessibles, de sorte qu'une large gamme de techniques d'illumination est désormais disponible pour sonder de façon active une zone qui peut être très éloignée de l'observateur. Toutefois, que ce soit pour la détection (télémétrie) ou l'identification de polluants ou d'objets à longue portée, l'analyse des signaux optiques reçus en retour souffre de façon générale de la sensibilité de la voie de réception.

Il est bien connu que les détecteurs fonctionnant aux longueurs d'ondes plus basses (par exemple visible ou proche IR) ont de meilleures performances que ceux fonctionnant dans l'infrarouge plus lointain. C'est le cas en termes de sensibilité, de bande passante, d'encombrement dans la mesure où les détecteurs infrarouges sont le plus souvent refroidis ce qui est problématique pour des applications embarquées.

C'est pour cela que l'on a cherché à développer des convertisseurs de fréquences qui génèrent, à partir d'un faisceau signal IR, un faisceau converti présentant une longueur d'onde diminuée (soit une fréquence augmentée).

Les processus non linéaires quadratiques d'ordre 2 nécessitent l'accord de phase entre le faisceau pompe de forte intensité, le faisceau signal Fs à détecter et donc à convertir, et le faisceau converti Fc, lors de leur propagation dans le milieu non linéaire. La dispersion des indices optiques permet en pratique de satisfaire cette condition pour un nombre limité de matériaux biréfringents. Malheureusement ces matériaux ne possèdent pas nécessairement les meilleurs coefficients non-linéaires, des plages de longueur d'onde de fonctionnement importantes, des gammes de température d'utilisation et de focalisation des faisceaux suffisantes. L'utilisation de réseaux optiques composés de structures à base de cristaux optiques non linéaires permet, sous certaines conditions, de s'affranchir en partie de ces limitations. Pour cela on utilise la technique du quasi-accord de phase, ou QAP (Quasi Phase Matching ou QPM en anglais) qui consiste à réaliser des modifications locales du coefficient non linéaire d'ordre 2 ou $\chi^{(2)}$ afin que le désaccord de phase entre les ondes accumulé au cours de la propagation soit périodiquement compensé (J.A Armstrong et al., « Interactions between light waves in a non linear dielectric » Physical Review, vol 127, n°6, p1918-1939, 1962). On crée ainsi un réseau non linéaire artificiel.

Dans des matériaux ferroélectriques comme le niobate de lithium, on sait inverser le signe de la polarisation diélectrique de domaines de quelques micromètres de large, dans toute la profondeur, par application d'un champ électrique selon l'axe cristallographique Z de ce matériau. Le faisceau se propageant voit une modulation de la susceptibilité de type +d/-d/+d/-d propice au QAP.

Certains semi-conducteurs, comme l'arséniure de gallium, noté GaAs, présentent à la fois de forts coefficients non linéaires et de larges gammes de transparence. Toutefois ces cristaux appartiennent à la classe cristallographique de symétrie cubique, ce qui les rend isotropes, et donc impropres au traditionnel accord de phase biréfringent. D'autre part ils ne disposent pas des propriétés ferroélectriques du niobate de lithium. Il est cependant possible d'utiliser le GaAs en régime QAP en fabriquant des structures à orientation cristalline périodiquement inversée, notées OP de l'anglais « Orientation-Patterned ». On obtient ainsi également un $\chi^{(2)}$ dont le signe s'inverse périodiquement.

De nombreux progrès ont été effectués dans la conception de ces matériaux non-linéaires d'ordre 2 à quasi-accord de phase, tels que le PPLN, le PPKTP ou encore l'OP-GaAs ou l'OP-GaP. Ces matériaux permettent de convertir efficacement le signal à détecter vers des longueurs d'ondes plus petites où les détecteurs sont plus performants.

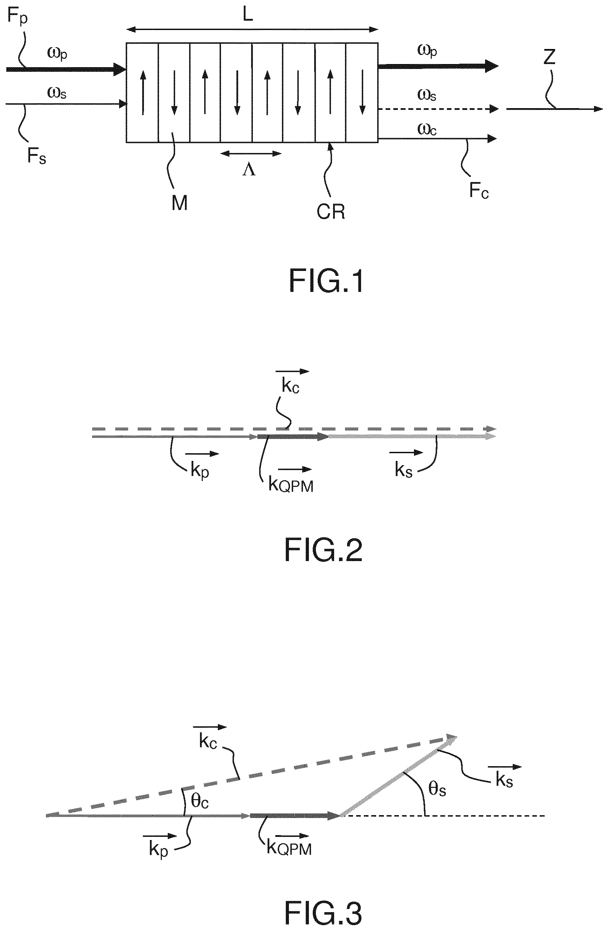

La conversion de fréquence effectuée par l'intermédiaire d'un cristal CR d'un matériau M dont le signe du coefficient non linéaire d'ordre 2 $\chi^{(2)}$ est inversé périodiquement selon un axe Z, le cristal étant configuré de sorte que la conversion s'opère par effet non linéaire d'ordre 2 à quasi accord de phase est illustré figure 1. Lorsque la condition de quasi accord de phase est vérifiée, on obtient par somme de fréquence la conversion d'une partie du faisceau signal Fs en un faisceau converti Fc de longueur d'onde plus faible :

$$\omega_s + \omega_p = \omega_c. \qquad (1)$$

Avec $\omega=2\pi v=2\pi c/\lambda$ v fréquence et $\lambda$ longueur d'onde du signal considéré.

La condition (1) illustre la conservation de l'énergie.

Le processus de conversion nécessite l'emploi d'un faisceau de pompe Fp de forte puissance délivré par un laser de pompe.

Pour que le processus de conversion fonctionne, le système doit respecter la condition d'accord de phase, qui exprime le fait que les ondes se propagent à la même vitesse :

$$\overrightarrow{\Delta k} = \vec{0} = \vec{k}_c - \vec{k}_s - \vec{k}_p - \frac{2\pi}{\Lambda}\vec{z} \qquad (2)$$

Avec A périodicité du changement de coefficient non-linéaire.

$$k_i = \frac{2\pi n_i}{\lambda_i} \text{ , i= c,s,p.}$$

$$\vec{k}_{QPM} = \frac{2\pi}{\Lambda}\vec{z}$$

Cette condition dépend fortement de l'angle d'incidence du faisceau signal sur le cristal.

Ainsi la norme des vecteurs kc, ks et kp est donnée par la condition sur les énergies, et on adapte le vecteur réseau pour réaliser le quasi-accord de phase.

La configuration la plus couramment utilisée consiste à réaliser l'accord de phase pour tous les faisceaux colinéaires, tel qu'illustré figure 2.

Lorsque le faisceau signal arrive avec un angle non nul, la condition d'accord de phase est modifiée selon la figure 3. Il faut alors adapter le QAP, les normes des vecteurs étant données par la conservation de l'énergie. L'efficacité de conversion est définie comme :

$$\eta = \frac{P_c\omega_s}{P_s\omega_c}$$

Elle chute brutalement lorsque le désaccord de phase augmente, de sorte que

$$\eta \propto \text{sinc}^2\left(\frac{\Delta k L}{2}\right).$$

L'acceptance angulaire est alors donnée par la formule [3] :

$$\Delta\theta_s = \sqrt{\frac{5,56}{\left(1 - \dfrac{k_s}{k_c}\right)k_s L}}$$

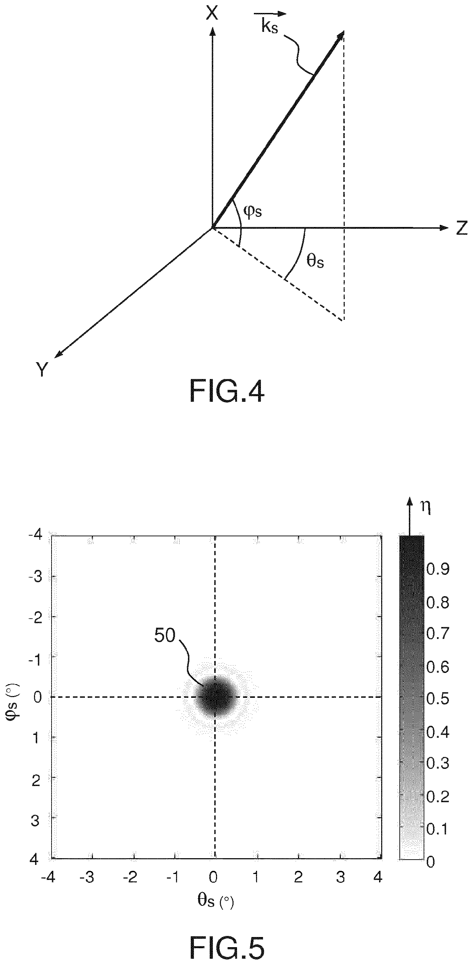

La figure 4 représente les angles $\theta s$ et $\varphi s$ permettant de repérer un faisceau signal ks dans un espace XYZ. Z est la direction principale de propagation, normale aux plans qui séparent les domaines présentant une valeur d'un signe donné du coefficient $\chi^{(2)}$. Pour $\varphi s =0°$, le vecteur ks est dans le plan YZ.

La figure 5 illustre un exemple des valeurs d'efficacité de conversion $\eta$ pour un faisceau signal ks, dans un diagramme $(\theta s, \varphi s)$ pour le cas d'accord de phase paramétré pour des vecteurs colinéaires illustré figure 2. Dans ce diagramme, la direction de l'axe Z a les coordonnées (0°,0°). La zone foncée est un disque 50 correspondant à la plage angulaire de faisceau signal convertie avec une efficatié élevée, pour un signal de pompe incident à (0°,0°) pour un cristal de 20 mm de longueur selon Z, un signal à 1560 nm et une pompe à 1064 nm. On obtient une acceptance angulaire d'environ 0,8° centrée autour de (0°,0°).

Ainsi, classiquement inférieure à 1° en général, cette faible acceptance angulaire limite fortement le champ converti et rend cette solution peu ou pas utilisable en pratique, que ce soit pour la détection des photons convertis sur des détecteurs mono-éléments ou l'imagerie avec une haute résolution sur des capteurs matriciels.

La réalisation de dispositifs de détection par somme de fréquences a conduit à des propositions d'architectures variées en méthodes de pompage du cristal, en sources d'illumination ainsi qu'en traitement du signal converti pour une application donnée. Les propositions visant à améliorer les performances de la conversion se classent en deux catégories.

La première concerne l'utilisation d'une source d'illumination spectralement large. Un système d'imagerie par somme de fréquences d'un signal incohérent a déjà été breveté dans le document US13/054420, où une cavité pour la pompe est construite autour du cristal. L'utilisation d'une source thermique (incohérente) permet de convertir une longueur d'onde signal différente pour chaque angle d'incidence dans le cristal. En effet, pour un angle d'incidence donné, la condition d'accord de phase est obtenue par ajustement de la norme du vecteur d'onde en modifiant la longueur d'onde du signal. La même idée a été appliquée en utilisant une source d'illumination ASE, spectralement large (partiellement cohérente). Ces systèmes ont été développés pour de l'imagerie. Ils souffrent cependant d'une mauvaise efficacité de conversion car pour un angle d'incidence donné tout le signal n'est pas converti, seulement la longueur d'onde correspondant à la condition d'accord de phase, ce qui limite l'intérêt de cette méthode pour augmenter la sensibilité des détecteurs infrarouges.

La deuxième catégorie utilise un gradient de température selon l'axe Z du cristal pour moduler la condition d'accord de phase avec la position dans le cristal. Le gradient de température induit un gradient d'indice optique différent pour les trois ondes et donc une modification de la condition d'accord de phase ce qui augmente l'acceptance angulaire du système. Cependant, la conversion d'un angle signal donné, s'effectue seulement dans une petite tranche du cristal, ce qui ne permet pas d'obtenir une bonne efficacité de conversion.

Il n'existe à ce jour aucun dispositif permettant d'obtenir à la fois une grande acceptance angulaire ou une forte résolution et une bonne efficacité de conversion.

Le document US2011/170172 décrit un système de conversion de fréquence comprenant un « wavelength converter « disposé entre deux miroirs concaves. Le faisceau passe plusieurs fois dans le cristal avec des angles différents.

Le document JP 2008 224932 décrit décrit un système d'illumination d'un cristal non linéaire qui réalise un décalage progressif du faisceau avec des miroirs simples.

Le document WO2014/051573 décrit décrit un OPO accordable en fréquence comprenant au moins un cristal dans une cavité, dans laquelle on injecte un « seed beam » et un « pump pulse ». Dans l'exemple de la figure 3 la cavité comprend un prisme rotatif qui établit un trajet rectangulaire suivi par le faisceau qui circule dans la cavité et deux cristaux sont présents dans la cavité. Les angles d'incidence des faisceaux sur les cristaux sont fixes.

Un but de la présente invention est de proposer un système de conversion efficace permettant d'augmenter l'acceptance angulaire (application détection) ou la résolution (application imagerie), basé sur une utilisation originale du faisceau pompe.

## DESCRIPTION DE L'INVENTION

L'invention concerne un système de conversion de fréquence apte à générer au moins un faisceau converti présentant une fréquence convertie à partir d'au moins un faisceau signal présentant une fréquence signal, en utilisant une pluralité de n faisceaux pompe élémentaires $F_{p,i}$ indicés i, i variant de 1 à n, n supérieur ou égal à 2, présentant une fréquence pompe,

le système comprenant :

- un cristal comprenant un matériau dont le signe du coefficient non linéaire d'ordre 2 est inversé périodiquement le long d'un axe Z, □ledit cristal étant configuré de sorte que la conversion s'opère par effet non linéaire d'ordre 2 dans ledit cristal,
- un dispositif optique configuré pour générer ladite pluralité de n faisceaux pompe élémentaires à partir d'un faisceau pompe initial, un faisceau pompe élémentaire $F_{p,i+1}$ d'indice i+1 étant généré par redirection vers le cristal du faisceau pompe élémentaire $F_{p,i}$ d'indice i après sa traversée du cristal,

le dispositif optique (DO) comprenant un premier composant optique (ROC1) et un deuxième composant optique (ROC2) disposés de part et d'autre du cristal (CR), lesdits premier et deuxième composants optiques étant configurés pour réfléchir au moins en partie la pluralité de faisceaux pompe élémentaires, le premier composant optique (ROC1) comprenant deux miroirs (M1, M'1) plans perpendiculaires entre eux et jointifs selon une première arête (d1), et le deuxième composant optique (ROC2) comprenant deux miroirs plans (M2, M'2) perpendiculaires entre eux et jointifs selon une deuxième arête (d2),

- le cristal et le dispositif optique étant configurés de sorte qu'au moins un faisceau pompe élémentaire, un faisceau signal et un faisceau converti vérifient une condition de quasi-accord de phase lors de leur propagation dans ledit cristal selon un sens de propagation.

Selon une première variante le dispositif optique est configuré de sorte que la pluralité de n faisceaux pompe élémentaires soient incidents sur le cristal selon des angles d'incidence respectifs compris dans au moins un plan YZ et prenant une pluralité de valeurs différentes.

Selon un mode de réalisation le dispositif optique comprend en outre une paire de lentilles disposées de part et d'autre du cristal en configuration afocale et dont les axes optiques respectifs coïncident avec l'axe Z.

Avantageusement les première et deuxième arêtes sont perpendiculaires à Z, parallèles entre elles selon un axe X, et sécantes avec un même axe Z', parallèle et non confondu à l'axe Z, le dispositif optique comprenant en outre une première lentille présentant une première focale et une deuxième lentille présentant une deuxième focale disposées de part et d'autre du cristal et dont les axes optiques respectifs coïncident avec l'axe Z, la première et la deuxième lentille étant disposées en configuration afocale.

Selon un mode de réalisation les première et deuxième arêtes sont perpendiculaires à Z et sont parallèles entre elles selon un axe X, et décalées selon un axe Y d'une distance $\Delta y$.

Selon un autre mode de réalisation les première et deuxième arêtes sont perpendiculaires à Z et présentent dans un plan XY un angle non nul entre elles.

Selon une option, le premier et le deuxième composant optique présentent respectivement une première et une deuxième ouverture centrale disposée sur l'axe optique Z des lentilles de manière à générer un faisceau pompe élémentaire présentant un angle d'incidence nul sur le cristal.

Selon une deuxième variante le dispositif optique est configuré de sorte que la pluralité de n faisceaux pompe élémentaires soient parallèles entre eux.

Selon un mode de réalisation de la deuxième variante les première et deuxième arêtes sont perpendiculaires à Z et présentent dans un plan XY un angle non nul entre elles.

Préférentiellement le premier et le deuxième composant optique sont configurés de manière à générer des faisceaux pompe élémentaires présentant des points d'impact sur des faces du cristal répartis sur un cercle.

Selon une option le premier et le deuxième composant optique présentent respectivement une première et une deuxième ouverture centrale de manière à ajouter auxdits faisceaux pompes élémentaires présentant des points d'impact répartis sur un cercle un faisceau pompe élémentaire présentant un point d'impact localisé au centre dudit cercle.

Préférentiellement le faisceau signal présente une longueur d'onde dans l'infrarouge, et le faisceau converti présente une longueur d'onde inférieure dans l'infrarouge proche ou dans le visible.

D'autres caractéristiques, buts et avantages de la présente invention apparaîtront à la lecture de la description détaillée qui va suivre et en regard des dessins annexés donnés à titre d'exemples non limitatifs et sur lesquels :

La figure 1 déjà citée décrit un cristal configuré de sorte que la conversion s'opère par effet non linéaire d'ordre 2 à quasi accord de phase.

La figure 2 déjà citée décrit un accord de phase avec tous les faisceaux colinéaires.

La figure 3 déjà citée illustre un accord de phase avec un faisceau signal incident sur le cristal avec un angle non nul.

La figure 4 déjà citée représente les angles $\theta s$ et $\varphi s$ permettant de repérer un faisceau signal ks dans un espace XYZ,

La figure 5 déjà citée illustre un exemple des valeurs d'efficacité de conversion $\eta$ pour un faisceau signal ks, dans un diagramme $(\theta s, \varphi s)$.

La figure 6 illustre un système 10 de conversion de fréquence selon l'invention.

La figure 7 illustre un premier mode de réalisation de la première variante du système selon l'invention

La figure 8a illustre la relation vectorielle de quasi-accord de phase pour un angle de pompe de +1°et un vecteur ks tel que $\theta s=0°$ et $\varphi s=0°$.

La figure 8b illustre la relation vectorielle de quasi accord de phase pour un angle de pompe de +1°dans pour le cas du vecteur ks tel que $\theta s=2°$ et $\varphi s=0$.

La figure 9 illustre la cartographie d'efficacité de conversion correspondant à l'accord de phase exemplifié aux figures 8a et 8b.

La figure 10 illustre la cartographie d'efficacité de conversion correspondant à un angle de pompe nul, avec les mêmes conditions de QAP que la figure 8.

La figure 11 illustre la relation vectorielle de quasi-accord de phase pour un angle de pompe nul.

La figure 12 illustre la cartographie d'efficacité de conversion correspondant à trois angles de pompe différents.

La figure 13 illustre la cartographie de signal converti correspondant à une pluralité d'angles de pompe de sorte que les anneaux se recouvrent.

La figure 14 illustre un autre mode de réalisation de la première variante selon une première option.

La figure 15 illustre une deuxième option de cet autre mode de réalisation de la première variante.

La figure 16 illustre une troisième option de cet autre mode de réalisation de la première variante.

La figure 17 illustre la première arête d1 et la deuxième arête d2 dans un plan XY.

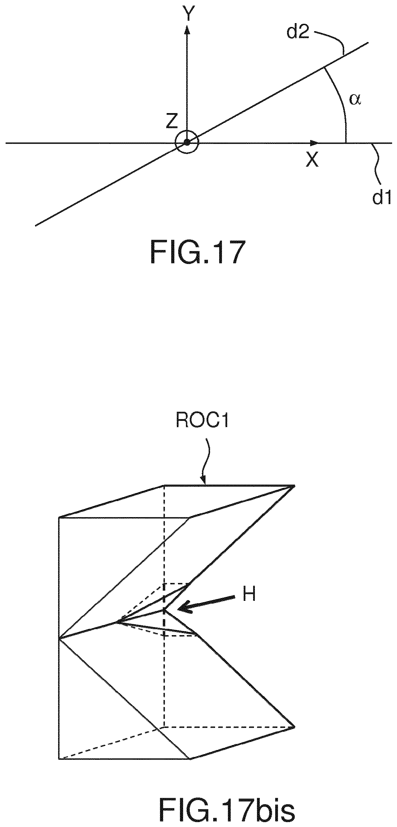

La figure 17bis illustre l'exemple d'un bi-miroir présentant un trou pour laisser entrer (et éventuellement ressortir) le faisceau pompe initial.

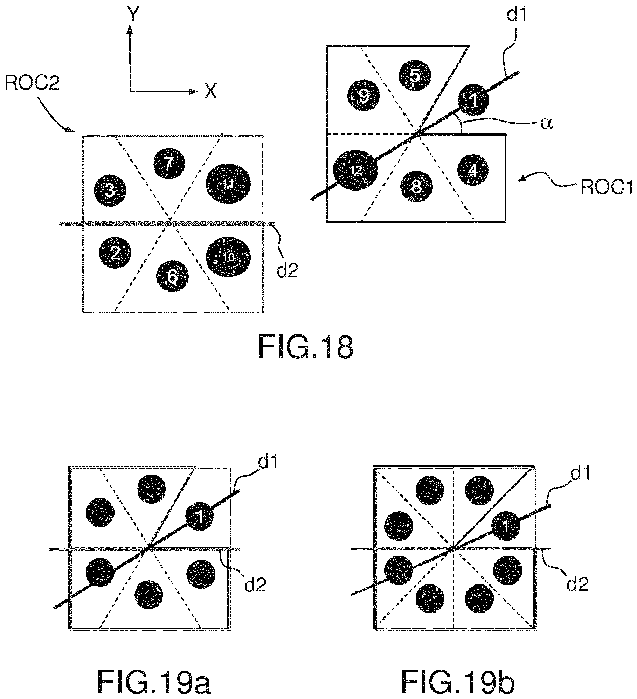

La figure 18 illustre le trajet du faisceau pompe dans la cavité pour une configuration avec le faisceau pompe qui traverse le cristal 6 fois.

La figure 19a illustre les deux arêtes d1 et d2 et les points d'impacts du faisceau pompe dans le plan XY pour la configuration dans laquelle le faisceau traverse 6 fois le cristal.

La figure 19b illustre les deux arêtes d1 et d2 et les points d'impacts du faisceau pompe dans le plan XY pour la configuration dans laquelle le faisceau traverse 8 fois le cristal.

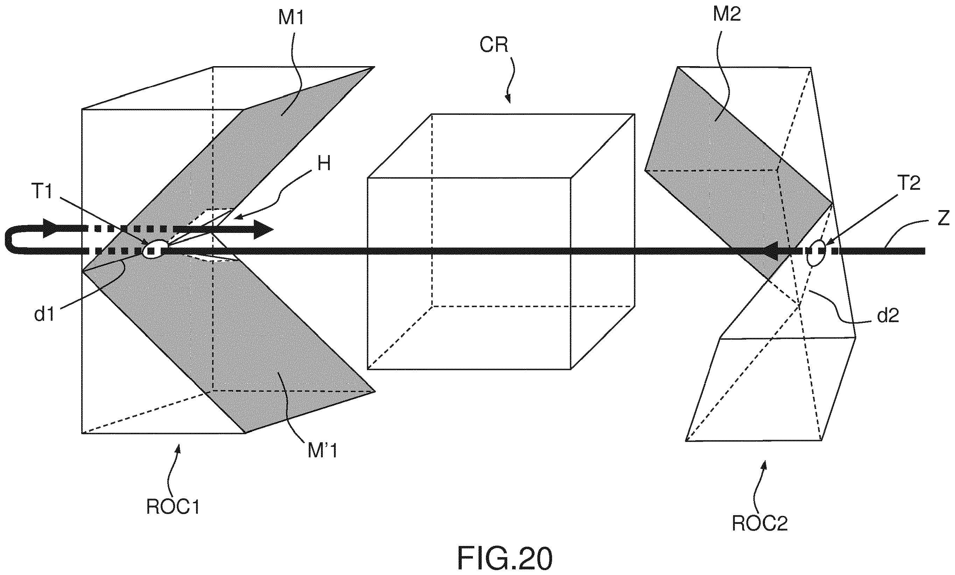

La figure 20 illustre un mode de réalisation de la troisième option de cet autre mode de réalisation de la première variante.

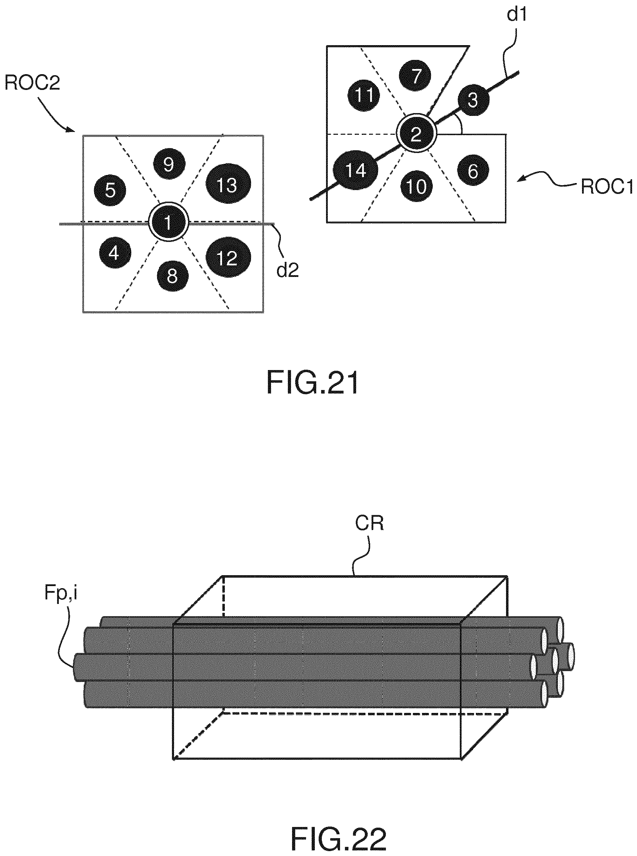

La figure 21 illustre le trajet du faisceau pompe dans la cavité avec la géométrie de la figure 20, pour une configuration avec le faisceau pompe qui traverse le cristal 6 fois.

La figure 22 illustre une deuxième variante du système selon l'invention dans laquelle le dispositif optique est configuré de sorte que la pluralité des n faisceaux pompe élémentaires soient parallèles entre eux, les n faisceaux pompe élémentaires étant parallèles à l'axe Z.

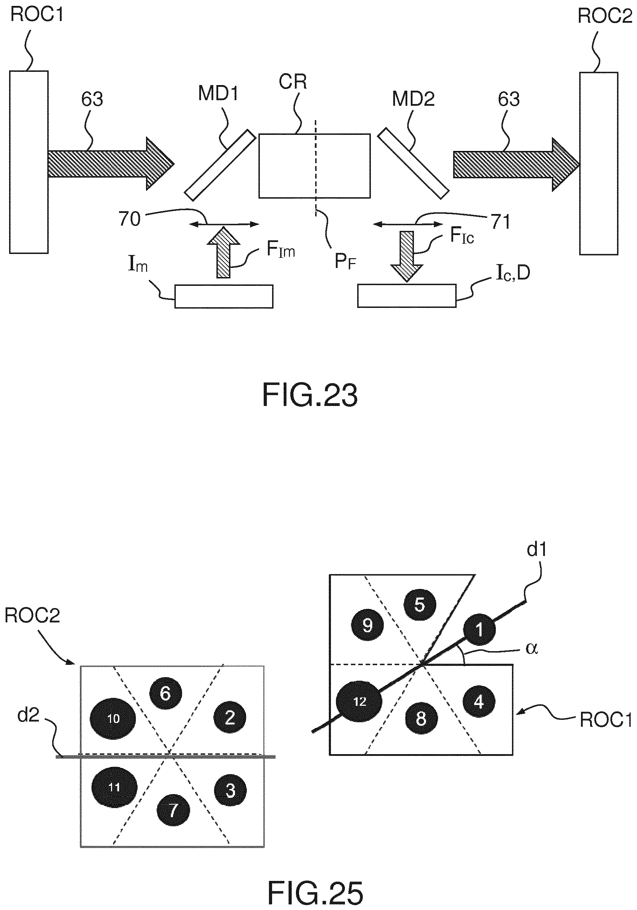

La figure 23 illustre un schéma de principe d'un système d'imagerie.

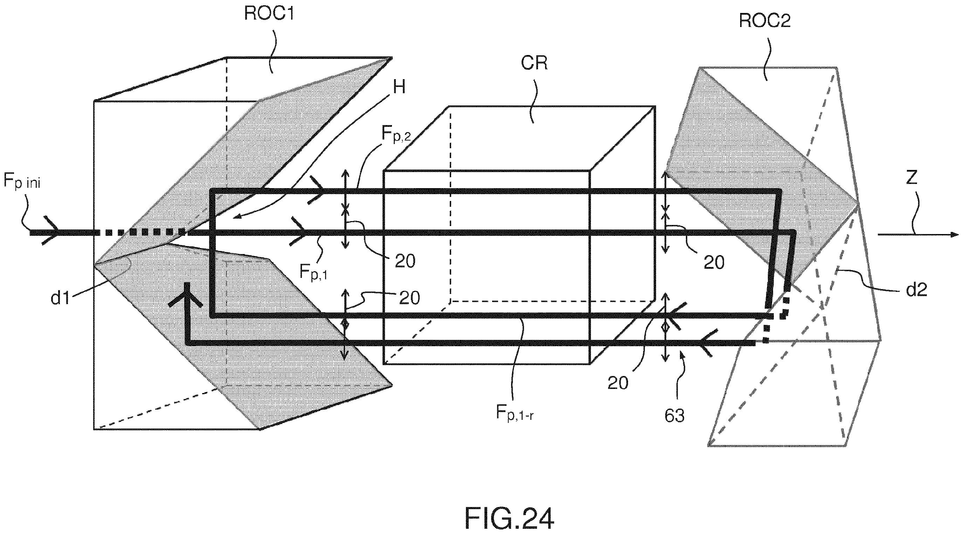

La figure 24 illustre un mode de réalisation de la deuxième variante du système de conversion selon l'invention.

La figure 25 illustre le trajet du faisceau pompe dans la cavité pour le cas de la deuxième variante avec un faisceau pompe qui traverse le cristal 6 fois.

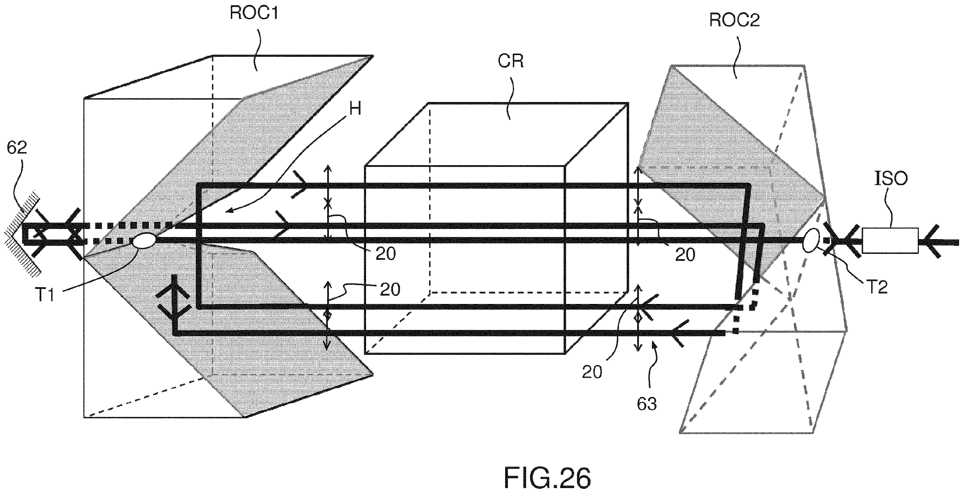

La figure 26 illustre un autre mode de réalisation de la deuxième variante du système de conversion selon l'invention dans lequel les bi-miroirs présentent une ouverture centrale.

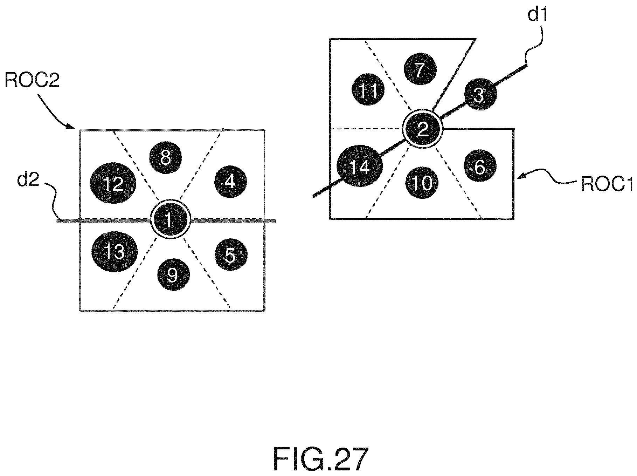

La figure 27 illustre le trajet du faisceau pompe dans la cavité pour le cas de la deuxième variante décrite figure 26.

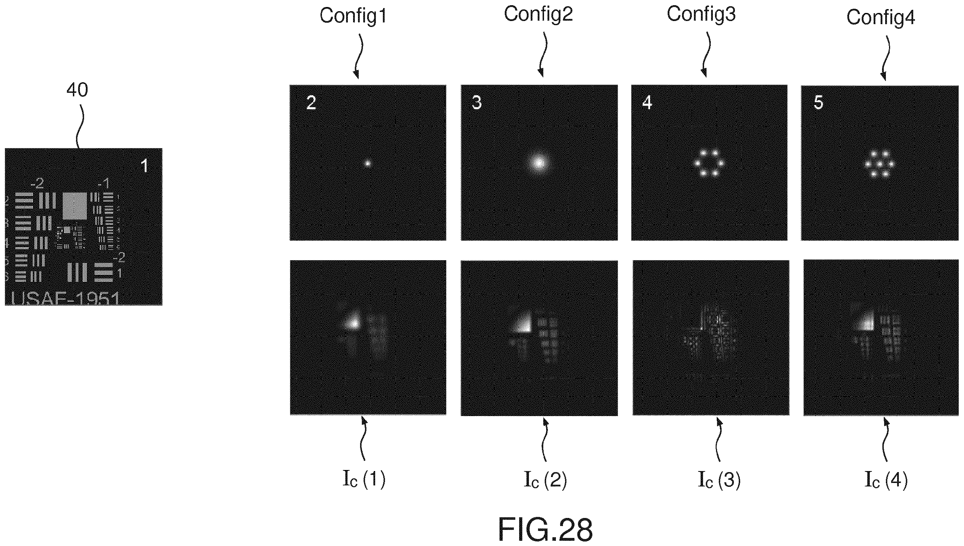

La figure 28 illustre les gains obtenus en terme de résolution d'images selon différentes configurations de la deuxième variante de l'invention.

## DESCRIPTION DETAILLEE DE L'INVENTION

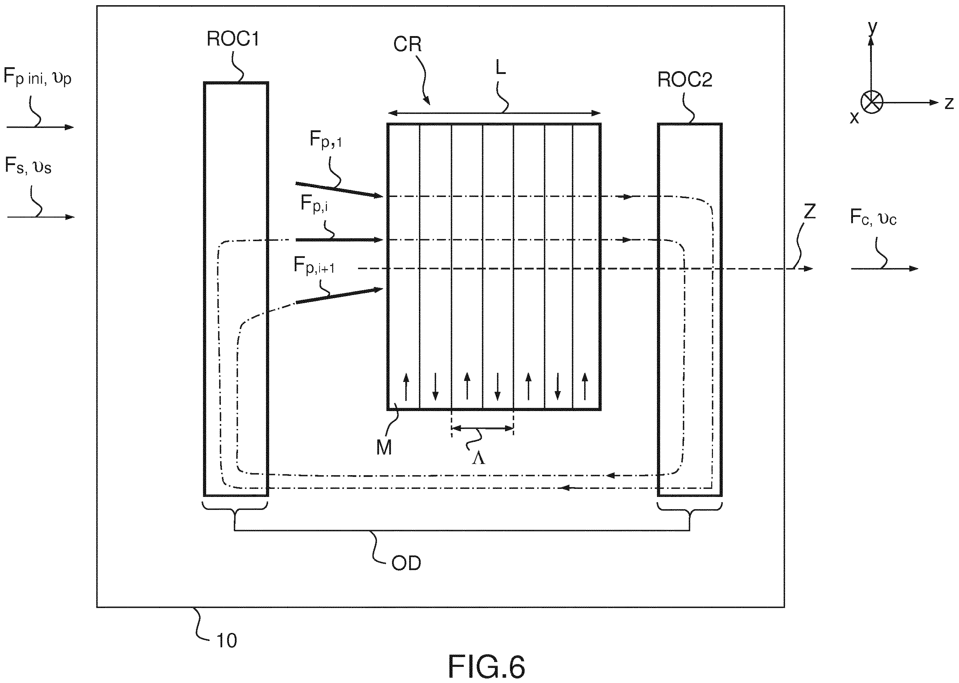

La figure 6 illustre un système 10 de conversion de fréquence selon l'invention. Ce système est apte à générer au moins un faisceau converti Fc présentant une fréquence convertie vc à partir d'au moins un faisceau signal Fs présentant une fréquence signal vs, en utilisant une pluralité de n faisceaux pompe élémentaires $F_{p,i}$ indicés i, i variant de 1 à n, présentant une fréquence pompe vp. La conversion s'effectue avec au moins deux faisceaux pompe élémentaires, soit n supérieur ou égal à 2.

Les fréquences vs, vc et vp doivent vérifier la condition (1) sur les énergies, ce qui détermine les normes des vecteurs ks, kc et kp.

A la différence des systèmes selon l'état de la technique, le système selon l'invention fonctionne avec une pluralité de faisceaux pompes.

Le système 10 comprend un cristal CR comprenant un matériau M dont le signe du coefficient non linéaire d'ordre 2 $\chi^{(2)}$ est inversé périodiquement le long d'un axe Z, le cristal étant configuré de sorte que la conversion s'opère par effet non linéaire d'ordre 2 dans ce cristal, tel que décrit précédemment. La direction Z correspond à la normale aux plans qui séparent les domaines présentant un signe donné du coefficient $\chi^{(2)}$ et à la direction générale de propagation des faisceaux. Sur la figure 6, cela signifie que l'accord de phase entre les différents faisceaux est obtenu pour une propagation de ceux-ci de gauche à droite.

Le système selon l'invention comprend en outre un dispositif optique OD configuré pour générer la pluralité des n faisceaux pompe élémentaires $F_{p,i}$ à partir d'un faisceau pompe initial Fpini.

Le principe de l'invention est de réaliser un recyclage du faisceau pompe une fois que celui-ci a traversé le cristal, c'est-à-dire de faire passer plusieurs fois un faisceau pompe dans le cristal : un faisceau pompe élémentaire $F_{p,i+1}$ d'indice i+1 est généré par redirection vers le cristal du faisceau pompe élémentaire $F_{p,i}$ d'indice i après sa traversée du cristal.

Le cristal CR et le dispositif optique DO sont configurés de sorte qu'au moins un faisceau pompe élémentaire, un faisceau signal et un faisceau converti vérifient une condition de quasi accord de phase lors de leur propagation dans le cristal selon un sens de propagation, dans l'exemple de la figure 6 de gauche à droite. La présence d'une multiplicité de faisceaux pompe incidents sur le cristal dans le bon sens de propagation (de gauche à droite sur la figure 6) permet d'augmenter les possibilités d'accord de phase.

Le recyclage de la pompe est possible car la puissance de pompe est bien plus importante que celle du signal à convertir, on dit que celle-ci n'est pas « déplétée » le long du cristal. On peut donc réutiliser ce faisceau pompe pour à nouveau pomper le cristal. Préférentiellement le faisceau pompe initial Fpini a une puissance instantanée au moins 100 fois supérieure à celle du faisceau signal Fs.

Le système selon l'invention présente deux variantes de recyclage, présentant chacune des avantages, qui sont décrites plus loin.

Pour réaliser le recyclage, le dispositif optique DO comprend un premier composant optique ROC1 et un deuxième composant optique ROC2 disposés de part et d'autre du cristal CR, les premier et deuxième composants optiques étant configurés pour réfléchir au moins en partie la pluralité de faisceaux pompe élémentaires tel qu'illustré figure 6. Les composants ROC1 et ROC2 définissent ainsi une cavité dans laquelle le cristal CR est disposé et dans laquelle les faisceaux élémentaires se propagent.

Selon un mode de réalisation, les composants ROC1 et ROC2 sont également configurés pour transmettre au moins une partie des faisceaux signal et converti.

Selon un autre mode de réalisation le faisceau signal est injecté dans le système via un miroir dichroïque disposé par exemple entre ROC1 et le cristal CR et le faisceau converti est extrait du système via un miroir dichroïque disposé par exemple entre ROC2 et le cristal CR. Dans ce cas les miroirs ROC1 et ROC2 n'ont pas à être transmissifs pour ces longueurs d'onde.

Les composants ROC1 et ROC2 sont configurés pour agir sur le faisceau pompe, en perturbant le moins possible les faisceaux signal et converti. Dans la suite pour plus de clarté les faisceaux signal et converti ne sont pas représentés sur les figures illustrant les différents modes de réalisation du système selon l'invention.

En outre comme décrit plus loin le premier composant optique ROC1 comprend deux miroirs M1, M'1 plans perpendiculaires entre eux et jointifs selon une première arête d1 et le deuxième composant optique ROC2 comprend deux miroirs plans M2, M'2 perpendiculaires entre eux et jointifs selon une deuxième arête d2.

Nous allons à présent décrire les deux variantes de l'invention, chacune présentant différents modes de réalisations.

Selon une première variante, le dispositif optique DO est configuré de sorte que la pluralité de n faisceaux pompe élémentaires soient incidents sur le cristal selon des angles d'incidence $\theta_{p,i}$ respectifs compris dans au moins un plan YZ et prenant une pluralité de valeurs différentes.

On utilise le repérage de la figure 4 pour les différents angles, et tous les angles sont considérés à l'intérieur du cristal.

En balayant plusieurs angles à l'intérieur de cristal, chaque angle de pompe $\theta_{p,i}$ donné va convertir un groupe d'angles signaux particuliers. On augmente ainsi significativement le champ des angles convertis, sans dégradation de l'efficacité de conversion, car dans ces systèmes la pompe n'est pas déplétée lors de la conversion, le signal étant très faible.

De plus, en fonction du choix des différents paramètres du montage, on peut choisir de sacrifier en partie le gain obtenu en angles convertis pour diminuer la puissance de pompe nécessaire à la conversion.

Cette première variante permet donc d'augmenter l'acceptance angulaire du système de conversion dans les cristaux non linéaires d'ordre 2 à quasi accord de phase.

Le balayage des angles dans un seul plan XY est suffisant pour obtenir une augmentation significative du champ dans les deux directions mais bien entendu, une incidence avec un angle $\varphi_{p,i}$ non nul est possible.

Nous allons à présent décrire à titre non limitatif différentes configurations optiques permettant de pomper le cristal non linéaire CR avec plusieurs angles d'incidence.

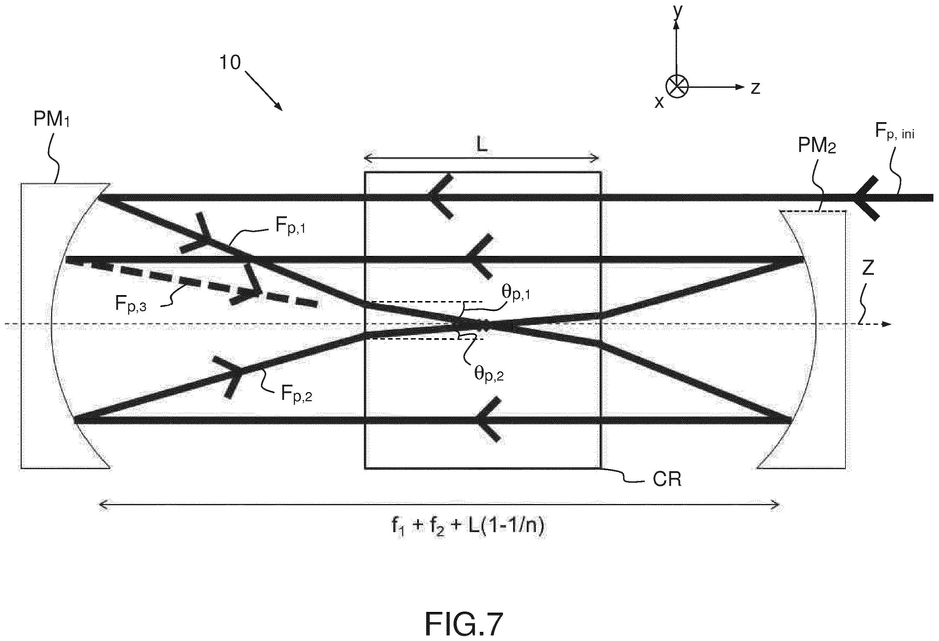

Selon un mode de réalisation non revendiqué illustré figures 7 à 13 le premier composant optique ROC1 est un premier miroir parabolique PM1 de focale f1 et le deuxième composant optique ROC2 est un deuxième miroir parabolique PM2 de focale f2, les deux miroirs paraboliques présentant un axe optique selon l'axe Z. Le cristal CR est bien entendu positionné entre les deux miroirs.

Avec des focales f1 et f2 différentes on peut pomper de nombreux angles différents dans un plan donné, par exemple YZ. Pomper dans un seul plan est suffisant pour augmenter significativement l'acceptance angulaire dans les deux dimensions XY.

Préférentiellement les foyers sont disposés de sorte qu'ils soient superposés au centre du cristal, de manière à concentrer les faisceaux pompe dans le cristal et maximiser l'efficacité de conversion.

Un des miroirs, ici PM2 est coupé à une extrémité pour faire entrer le faisceau pompe initial dans le système.

Les deux miroirs concaves de focales différentes forment une pseudo-cavité où les faisceaux arrivant par le haut de PM2 convergent vers l'axe Z en faisant plusieurs passages dans le cristal avec des angles différents.

Le cristal, de longueur L (typiquement de 1 à 5 cm), a un indice de réfraction nr (typiquement de 2 à 3,5). La cavité a, dans la configuration des foyers superposés, une longueur $f_1 + f_2 + L(1 - 1/nr)$ , avec L longueur du cristal, pour assurer la confocalité de la cavité.

Dans l'exemple de la figure 7 f1>f2 pour qu'à chaque tour de la cavité, l'angle d'incidence dans le cristal diminue tel que

$$\theta_{p,n+1} = -\frac{f_2}{f_1}\theta_{p,n}$$

Dans cette configuration, selon un mode de réalisation le signal Fs à convertir est transmis par PM1, traverse le cristal où il est converti, et le signal converti Fc est transmis par PM2. Selon un autre mode de réalisation le signal Fs est injecté dans le système via un miroir dichroïque disposé entre PM1 et CR par exemple, et le signal Fc est extrait via un miroir dichroïque disposé de l'autre côté du cristal, entre CR et PM2.

Les différents angles de pompe doivent donc se propager de PM1 vers PM2 pour permettre la conversion.

Cette configuration permet d'effectuer cela. Pour balayer correctement la gamme d'angles voulue le rapport f2/f1 doit être compris entre 0,8 et 0,99.

A titre d'exemple numérique :

CR : PPLN de 2 cm de longueur.

On définit λs la longueur d'onde du faisceau Fs, λp la longueur d'onde du faisceau Fp et λc la longueur d'onde du faisceau Fc.

λs = 1,56 μm ; λp = 1,064 μm
λc est alors de λc = 0,63 μm

On a ainsi permis de «diminuer » la longueur d'onde du signal à détecter vers la bande spectrale visible pour laquelle les détecteurs sont plus performants.

Plus généralement, on dispose d'un grand choix de longueur d'onde de pompe. On part typiquement d'un faisceau signal dans les bandes I, II ou III de transparence de l'atmosphère (comprises dans l'intervalle [1,5 μm; 15 μm]) que l'on cherche à convertir vers des longueurs d'onde plus basses, visibles ou proches infra rouge ([400 nm; 2 μm]).

La pluralité de faisceaux pompe élémentaires $F_{p,i}$ balaye les angles selon la direction angulaire θ. Préférentiellement $\theta_{p,i}$ diminue lorsque i augmente: le faisceau pompe élémentaire se rapproche de l'axe Z (axe optique du système) à chaque passage.

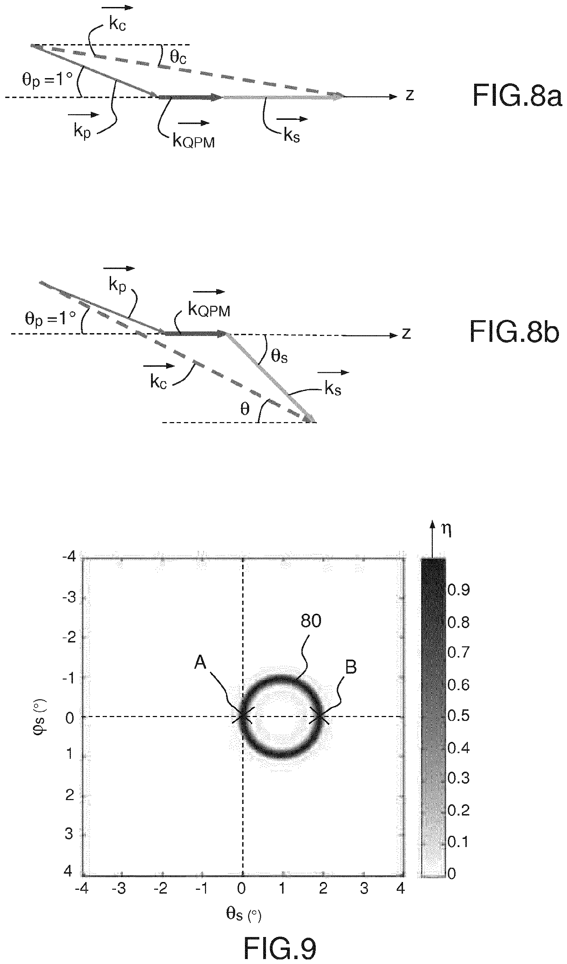

Considérons une pompe, dont l'angle avec l'axe optique Z est + 1 °. On règle l'accord de phase en choisissant le pas du réseau A ainsi que la température du cristal, de sorte que cet angle de pompe de +1° convertisse (entre autres) l'angle signal le long de l'axe optique, de coordonnée (0°,0°) dans le diagramme (θ, φ) de la figure 5. La figure 8a illustre la relation vectorielle de quasi accord de phase dans ce cas (vecteur ks selon l'axe optique Z).

La figure 8b illustre la relation vectorielle de quasi accord de phase pour le cas du vecteur ks tel que θs=2° et φs=0°.

Par application de la loi vectorielle de quasi accord de phase on obtient la cartographie d'efficacité de conversion de la figure 9. C'est un anneau 80 d'environ 1° de rayon, centré en (1°,0°) passant par le point A (0°,0°) et par le point B (2°,0°). Cet anneau 80 correspond donc à l'ensemble des angles de faisceau signal Fs pouvant être convertis avec une pompe incidente avec un angle θp = +1°.

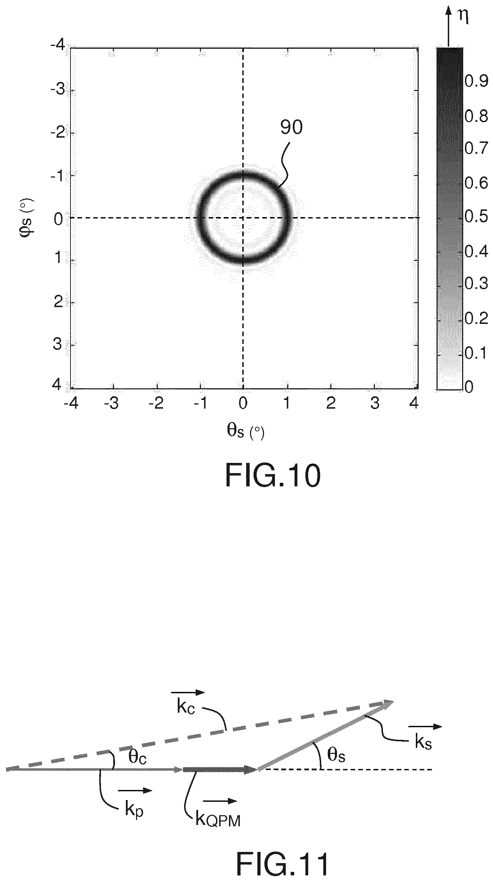

Modifier l'angle de la pompe entraîne une translation de cet anneau le long de l'axe φ = 0°. Ceci est illustré figure 10 où l'angle de pompe est nul (θp=0°, φp=0°). Dans ce cas l'anneau 90 obtenu de rayon 1° est centré à l'origine. La figure 11 illustre la relation vectorielle de quasi-accord de phase dans ce cas.

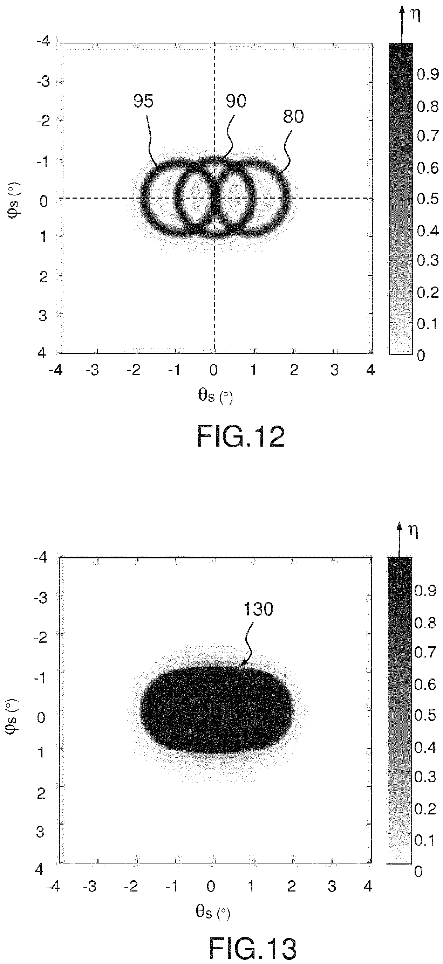

On comprend alors qu'un balayage en angles de pompe entraine la somme de ces différents anneaux, tel qu'illustré figure 12 (l'anneau 95 correspondant à un angle de pompe de θp=-1°).

Il convient de choisir correctement la densité d'angles de pompe pour paver correctement l'espace. L'épaisseur de l'anneau est d'autant plus petite que l'angle de pompe maximal est grand donc la densité d'angles de pompe nécessaires augmente.

Idéalement la densité d'angles doit être homogène, or dans le cas du dispositif optique de la figure 7 la densité augmente près de l'axe optique Z car l'angle entre 2 rayons adjacents diminue de $(-f2/f1)^2$. Ainsi les anneaux créés par les angles de pompe proches de 0° se superposent. Ceci n'est pas spécialement gênant sauf si l'énergie de pompe dans le cristal atteint le seuil d'endommagement. Ceci peut être corrigé en insérant des pertes sur l'un des miroirs concaves, la puissance de pompe diminuant à chaque passage, l'efficacité de conversion pouvant alors être maintenue uniforme pour tous les angles. Les pertes naturelles de la cavité peuvent être suffisantes.

En prenant f2/f1=0,88 et seulement 18 passages dans le cristal, on obtient la cartographie de signal converti de la figure 13, représentant la somme 130 des 18 anneaux, où la somme des efficacités est fixée à 1 lorsqu'elle est supérieure à 1. On obtient sur l'exemple de la figure 13 un champ de faisceau signal susceptible d'être converti de 4° x 2° au lieu de 0,8 x 0,8° dans le cas de la méthode classique. On a amélioré l'acceptance angulaire du système.

Grâce au recyclage du faisceau pompe le convertisseur de fréquence selon l'invention permet d'obtenir un faisceau converti à $\nu_c$ à partir d'un faisceau signal à $\nu_s$ incident selon un angle contenu dans un champ élargi. Avec un faisceau signal global présentant une pluralité de faisceaux signal d'angles compris dans un champ angulaire de l'ordre de grandeur du champ élargi, chaque faisceau signal générant un faisceau converti, on obtient une pluralité de faisceaux convertis, multipliant ainsi l'efficacité de conversion du système.

Nous allons maintenant donner un exemple de calcul pour dimensionner le système.

On calcule l'acceptance angulaire du système pour un angle de pompe donné. En calculant non seulement l'angle signal maximal converti mais aussi l'épaisseur de l'anneau converti. L'axe Z est l'axe principal de propagation des faisceaux optiques. Les angles sont considérés à l'intérieur du cristal et sont tous supposés petits, ce qui permet de faire les approximations trigonométriques usuelles.

Le faisceau pompe est considéré seulement dans le plan YZ, ainsi :

$$\varphi_p = 0°.$$

La condition d'accord de phase projetée sur les trois directions s'écrit alors

$$k_c \sin \varphi_c = k_s \sin \varphi_s \qquad \text{selon X}$$

$$k_c \sin \varphi_c \sin \theta_c = k_s \sin \varphi_s \sin \theta_s + k_p \sin \theta_p \qquad \text{selon Y}$$

$$k_c \sin \varphi_c \cos \theta_c - k_s \sin \varphi_s \cos \theta_s - k_p \cos \theta_p - k_{QPM} = \Delta k \qquad \text{selon Z}$$

Soit $\theta_{p,max}$ l'angle de pompe maximal incident sur le cristal CR. La condition d'accord de phase est choisie de sorte que cet angle de pompe convertisse le signal $\theta_s = 0°$, $\varphi_s = 0°$.

Dans ce cas, l'angle signal maximal converti dans le plan XZ est

$$\varphi_{s,max} = \frac{k_p}{k_c - k_s} \theta_{p,max} \sim \theta_{p,max}$$

et dans le plan YZ :

$$\theta_{s,max} = \frac{2k_p}{k_c - k_s} \theta_{p,max} \sim 2\,\theta_{p,max}$$

L'acceptance angulaire c'est-à-dire les angles tels que l'efficacité de conversion est supérieure à 0,5, soit l'épaisseur de l'anneau de conversion, est donnée par la formule :

$$\Delta\theta_s = \frac{5,56}{\frac{k_p k_s}{k_c} \theta_{p,max} L}$$

Lorsque l'on cherche à optimiser la taille du « champ converti », c'est-à-dire le champ d'angles de faisceau signal qui sont convertis par quasi-accord de phase, l'objectif est de convertir un champ le plus grand possible, donc des angles les plus grands possibles. Le facteur limitant sera alors les pertes naturelles du système. Dans ce cas il faut limiter le recouvrement entre les différents angles de conversion.

L'écart angulaire entre l'angle de pompe maximal $\theta_{p,1} = \theta_{p,max}$ et l'angle de pompe adjacent $\theta_{p,3} = (-f_2/f_1)^2 \theta_{p,max}$ soit $\Delta\theta_p = \theta_{p,1} - \theta_{p,3}$ doit être :

$$\Delta\theta_p = \frac{k_c - k_s}{k_p} \Delta\theta_s.$$

Cela permet de calculer le rapport des focales des miroirs :

$$\frac{f_2}{f_1} = \sqrt{1 - \frac{5{,}56\,(k_c - k_s)}{\dfrac{k_p{}^2 k_s}{k_c}\,\theta_{p,max}{}^2 L}}$$

On en déduit le nombre n de passages nécessaire pour paver l'espace. Il faut $\theta_{p,min} = \dfrac{k_c - k_s}{k_p}\dfrac{\Delta\theta_s}{2}$ , de plus $\theta_{p,min} = \left(\dfrac{f_2}{f_1}\right)^n \theta_{p,max}$ .

On obtient alors :

$$n = \frac{\ln\left(\dfrac{2{,}78 * k_c(k_c - k_s)}{k_s k_p{}^2 \theta_{p,max}{}^2 L}\right)}{\ln\left({f_2}/{f_1}\right)}$$

Par construction, l'écart entre les angles de pompe diminue à chaque tour de cavité, il y a alors un recouvrement des anneaux de conversion qui se met progressivement en place. Cela permet de compenser les pertes du système et d'avoir une efficacité de conversion globalement uniforme.

En effet, le calcul des pertes minimales de la cavité donne - en prenant une réflectivité de 99,99% pour les miroirs et une transmission de 99,75% à chaque face du cristal - 1,02% de pertes par tour de cavité. Cela va influer sur l'efficacité de conversion car pour une puissance de pompe P donnée :

$$\eta \propto \sin^2\left(\frac{\pi}{2}\sqrt{\frac{P}{P_{max}}}\right)$$

On peut alors raisonnablement utiliser des systèmes où n est compris entre 100 et 200 où on peut gagner, au niveau de l'acceptance angulaire, un facteur 10 dans une direction et 5 dans l'autre par rapport au système classique.

Lorsque l'on cherche à augmenter le champ converti tout en diminuant la puissance de pompe, il faut diminuer la différence entre les deux focales par rapport à la configuration précédente. Cela permet d'avoir un recouvrement des anneaux même pour les plus grands angles. Un recouvrement de 10 anneaux permet alors de diminuer la puissance de pompe nécessaire par 10. Cela se fait au prix d'une diminution du champ que l'on peut convertir.

Cette configuration est intéressante lorsqu'on désire un système pompé en continu ou avec des impulsions longues où la puissance instantanée de pompe disponible est limitée.

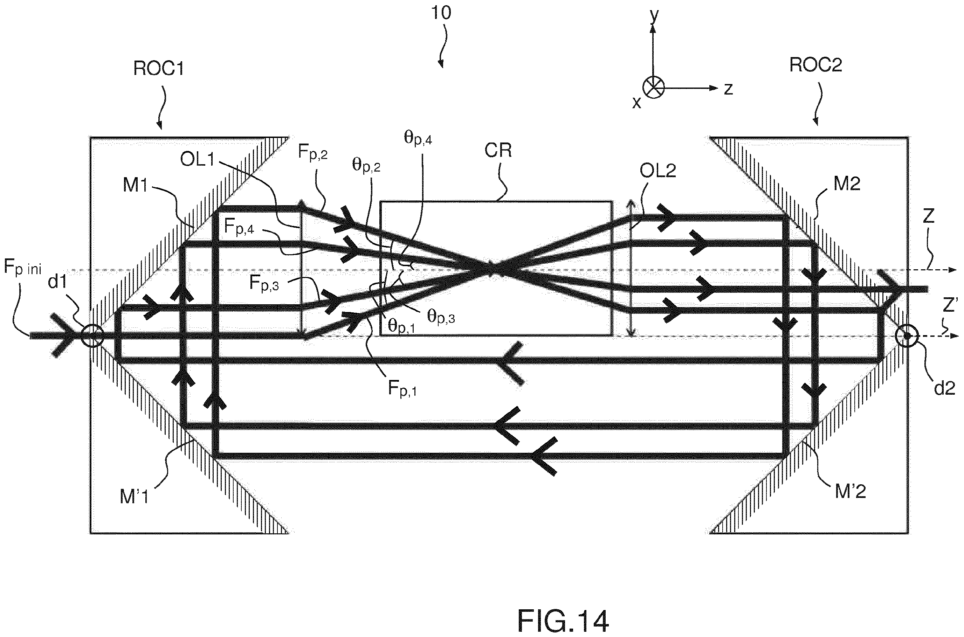

Pour une facilité de réalisation du système de conversion de fréquence selon l'invention, les deux miroirs peuvent être chacun l'hypoténuse d'un prisme, comme représenté par exemple figure 14.

Préférentiellement le dispositif optique DO comprend une paire de lentilles disposées de part et d'autre du cristal en configuration afocale et dont les axes optiques respectifs coïncident avec l'axe Z.

On peut agencer ROC1, ROC2 et la paire de lentilles de plusieurs manières.

Selon une première option illustrée figure 14 la première arête d1 et la deuxième arête d2 sont perpendiculaires à Z, parallèles entre elles selon l'axe X, et sécantes avec un même axe Z', parallèle et non confondu à l'axe Z.

Afin de réaliser les différents angles d'incidence, la paire de lentilles (OL1, OL2) du dispositif optique DO est telle que la focale de OL1 est supérieure à celle de OL2 selon les mêmes caractéristiques que le montage précédent avec les miroirs concaves. Les lentilles permettent de focaliser puis collimater les faisceaux pompe élémentaires, et de changer l'angle dans le cristal à chaque tour de « pseudo cavité ». La paire de lentilles OL1, OL2 ainsi que le cristal CR présentent des dimensions adaptées pour ne pas occuper tout l'espace selon le plan XY dans la cavité définie par ROC1 et ROC2 : de cette manière les faisceaux réfléchis par RCO2 après la traversée du cristal ne retraversent pas le cristal CR. Selon la première option le « retour » s'effectue en dehors du cristal.

Les bi-miroirs ROC1 et ROC2 permettent de déporter le faisceau en sortie et de l'emmener vers la surface d'entrée du cristal.

Un des bi-miroirs, ici ROC1 présente une ouverture orifice typiquement sur l'arête d1 pour faire entrer Fpini. Les pertes naturelles du système évitent d'introduire un orifice de sortie pour le faisceau pompe.

L'avantage de cette configuration, par rapport à celle de la figure 7, est qu'elle permet de dégager de l'espace « sous le cristal » afin d'éviter que le faisceau pompe retraverse le cristal lors du retour, lorsqu'il se propage en sens inverse de la direction de propagation pour laquelle le quasi-accord de phase est vérifié (et où la conversion ne peut pas avoir lieu). Cela évite de superposer le faisceau pompe dans les deux sens à l'intérieur du cristal. En particulier pour les petits angles d'incidence, on s'éloigne du seuil d'endommagement du cristal et on peut fournir plus d'énergie de pompe.

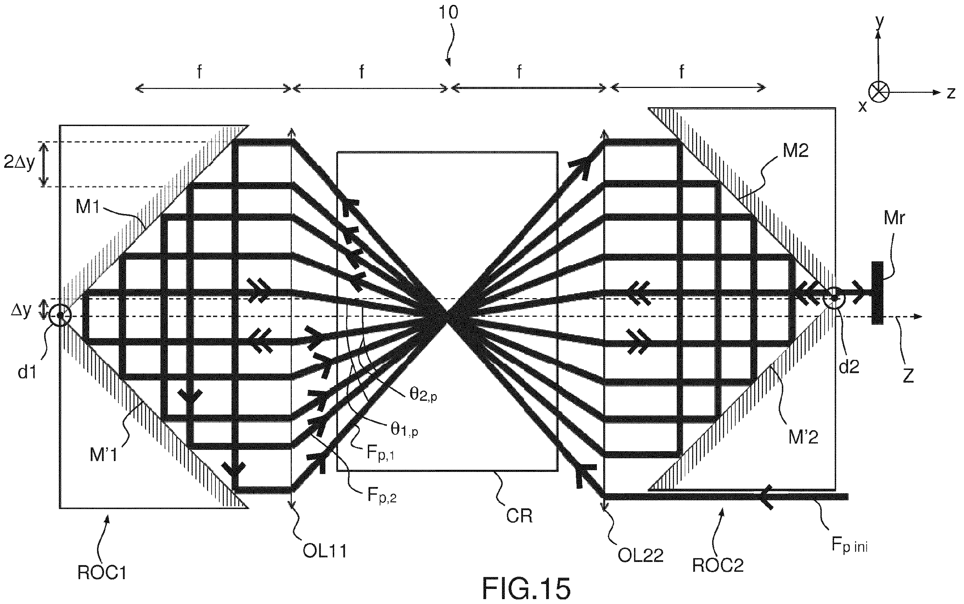

Selon une deuxième option illustrée figure 15 la première arête d1 et la deuxième arête d2 sont perpendiculaires à Z, parallèles entre elles et à l'axe X, et sont décalées selon un axe Y d'une distance $\Delta y$.

La paire de lentilles OL11 et OL22 sont disposées de part et d'autre du cristal CR, et présentent icic une même focale. Les lentilles présentent ici une pupille couvrant la taille des bi-miroirs, le « retour » s'effectuant ici au travers du cristal.

Le décalage d'une grandeur $\Delta y$ tel qu'illustré figure 15 combiné aux deux lentilles permet de pomper dans un plan YZ, avec un écart angulaire constant ce qui permet un bon agencement des anneaux, avec seulement quelques passages.

Le nombre de passages nécessaires dans le cristal est :

$$n = \frac{k_p^2 k_s \theta_{p,max}^2 L}{2.78 k_c (k_c - k_s)}.$$

$\Delta y$ joue ici le rôle que jouait le rapport $\frac{f_2}{f_1}$ dans la configuration de la figure 7 : il permet de faire varier les angles à l'intérieur du cristal.

Préférentiellement un miroir Mr à la sortie du système propage le faisceau pompe devenu parallèle à l'axe Z en sens inverse, et ainsi permet le pompage dans le bon sens de tout le cristal (seul un demi-espace est pompé dans le bon sens sans le miroir).

$$\Delta y = \frac{2.78 \, (k_c - k_s) k_c}{k_p^2 k_s \theta_{p,max} L} f$$

L'écartement $\Delta y$ peut être calculé simplement :

Il faut que la taille faisceau soit inférieure à $2\Delta y$ pour pouvoir entrer et ressortir correctement du système optique.

Outre l'avantage de sa facilité de mise en oeuvre, cette configuration permet un pavage régulier de l'espace en angles de pompe car il n'y a pas d'augmentation de la densité d'angles de pompe sur l'axe optique.

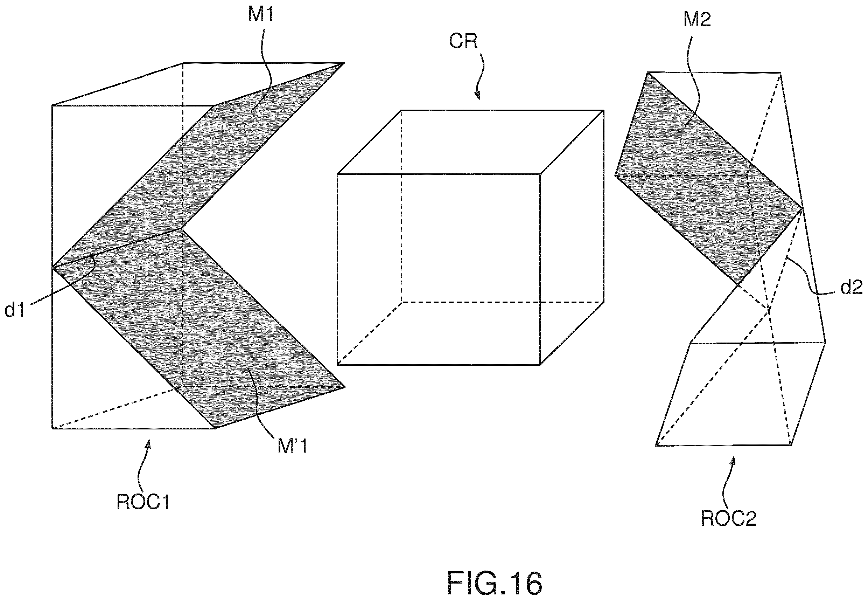

Selon une troisième option illustrée schématiquement figure 16 (sans les faisceaux pour plus de clarté) la première arête d1 et la deuxième arête d2 sont perpendiculaires à Z et présentent dans un plan XY un angle non nul $\alpha$ entre elles, tel que représenté figure 17.

Cette configuration s'inspire du système optique décrit dans le document EP1252687 pour le pompage multi-angles d'un disque laser.

Les lentilles OL11 et OL22, non représentées, présentent une taille de pupille sensiblement égale ou supérieure à la dimension des bi-miroirs, comme dans la figure 15.

Ici les deux bi-miroirs n'ont pas leurs axes l'un en face de l'autre et l'un des bi-miroirs, par exemple le bi-miroir ROC1, possède une encoche H (non représentée sur la figure 16) pour laisser entrer le faisceau pompe initial dans le système, tel que représenté figure 17bis. Cela permet de pomper le cristal avec des faisceaux pompe élémentaires ayant la même valeur d'angle d'incidence par rapport à l'axe Z mais avec des incidences selon des plans différents (pas uniquement le plan XY comme précédemment mais répartis sur un cône), le faisceau étant dévié à l'aide du système de bi-miroirs. L'angle $\alpha$ formé par les axes des prismes détermine le nombre de faisceaux traversant le système.

La figure 18 illustre une configuration avec le faisceau pompe qui traverse le cristal 6 fois. Le faisceau entre par 1, passe la première lentille, le cristal et la deuxième lentille et est réfléchi par ROC2 en 2, le faisceau arrive en 3 avant de réattaquer les deux lentilles et le cristal. Il arrive alors en 4, réfléchi par ROC1, arrive en 5 et retraverse le système, dans le bon sens pour pomper le cristal. Le faisceau arrive en 6...par construction, une fois que le faisceau s'est réfléchi sur toutes les faces, il refait le même trajet en sens inverse.

Des configurations à 2, 4, 8, 10, 12, ... passages peuvent être créées de la même manière. Un exemple pour 6 (figure 19a reprenant le principe de la figure 18) et 8 faisceaux (figure 19b) est illustré figure 19. Les figures 19a et 19b illustrent les deux arêtes d1 et d2 et les points d'impact du faisceau pompe dans le plan XY pour respectivement la configuration dans laquelle le faisceau traverse 6 fois le cristal et 8 fois le cristal.

Ce type de configuration limite le gain en terme d'angles converti (double ou triple l'acceptance angulaire) mais présente l'avantage de convertir la même amplitude angulaire dans les deux directions.

Une variante de cette troisième option est présentée figure 20 où les deux bi-miroirs possèdent une ouverture en leur centre, respectivement T1 et T2, de manière à générer un faisceau pompe élémentaire incident sur le cristal CR avec un angle d'incidence nul. Cela permet de compléter efficacement l'espace des angles convertis. La première ouverture centrale T1 et la deuxième ouverture centrale T2 incluent respectivement la première arête d1 et la deuxième arête d2 et sont disposées le long de l'axe optique Z des lentilles OL11 et OL22.

Par exemple le faisceau pompe initial est injecté via T2, ressort par T1, est réfléchi par un système de miroirs en sortie du T1 (non représenté) et re-rentre dans le système par une encoche dans ROC1 telle que décrite figure 17bis, effectuant à partir de là le même trajet que le système correspondant à la figure 16.

La figure 21 illustre une configuration associée avec le faisceau pompe qui traverse le cristal 6 fois.

De manière générale, les paramètres (cristal; dispositif optique) sont choisis :

- soit pour obtenir un grand champ converti avec peu de passages dans la cavité, ce qui est adapté à l'utilisation d'une pompe impulsionnelle,
- soit pour obtenir une grande superposition des efficacités de conversion, ce qui permet de diminuer la puissance de pompe nécessaire pour obtenir une bonne efficacité de conversion tout en ayant une acceptance angulaire plus grande que la configuration usuelle. Cela est adapté à l'utilisation d'une pompe continue.

Jusqu'à présent nous avons décrit les modes de réalisation du système selon l'invention pour une première variante dans laquelle les faisceaux pompe élémentaires sont incidents selon des angles qui présentent plusieurs valeurs différentes.

Ces configurations précédentes ne sont pas adaptées à l'imagerie car elles détruisent l'information spatiale contenue dans le signal. En effet, la structure du faisceau signal doit être conservée lors de la conversion pour reconstituer l'image en sortie du système. Or lors de la conversion, l'angle de la pompe est « imprimé » sur le signal. Si plusieurs angles de pompes sont présents, ils sont tous imprimés sur le signal converti et l'information angulaire du signal, et donc l'image, est perdue. Le signal converti obtenu est de type kaléidoscope.

Selon une deuxième variante du système 10 selon l'invention le dispositif optique DO est configuré de sorte que la pluralité des n faisceaux pompe élémentaires soient parallèles entre eux.

Préférentiellement les n faisceaux pompe élémentaires sont parallèles à l'axe Z, tel que représenté figure 22 (angle d'incidence nul). La pompe étant tout le temps colinéaire à l'axe optique Z, l'information spatiale du signal est conservée lors de la conversion.

Cette variante est ainsi adaptée aux applications en imagerie, pour lesquelles il ne faut pas perdre l'information spatiale associée au faisceau signal, tel qu'illustré figure 2.

Cette configuration présente l'avantage de pomper une surface plus grande du cristal, ce qui permet d'augmenter le nombre d'éléments résolus de l'image.

La conversion d'image est possible dans l'acceptance angulaire du QAP. Cette acceptance étant faible, (0,8°) on obtient de petites « imagettes ».

Le schéma de principe d'un système d'imagerie est donné figure 23. Les flèches 63 illustrent le faisceau pompe global circulant dans le système selon l'invention, constitué de la pluralité de faisceaux pompe élémentaires. Une image Im constituant un faisceau $F_{Im}$ est injectée dans le cristal CR par un miroir dichroïque MD1. Le faisceau $F_{Im}$ est converti en un faisceau $F_{Ic}$, constituant l'image convertie Ic; qui est extraite par un miroir dichroïque MD2 et détectée sur un détecteur D.

Le plan de Fourier $P_F$ est associé aux lentilles 70 et 71 qui traitent respectivement les photons « Signal » et « Converti ». Dans le plan de conversion $P_F$, les grands éléments spatiaux de l'image sont situés proches de l'axe optique alors que les petits éléments spatiaux de l'image sont éloignés de l'axe optique. Dans le plan $P_F$ le faisceau $F_{Im}$ est décomposé en une pluralité de faisceaux signal porteurs de fréquences spatiales différentes. Pour convertir toutes les fréquences spatiales de l'image il convient donc de pomper une grande surface de cristal.

Un mode de réalisation de cette deuxième variante est donné à titre non limitatif, et illustré figure 24. La configuration s'apparente à celle de la figure 16, sans les deux grandes lentilles en afocal. Un des composants optiques, dans l'exemple ROC1 présente une encoche H, tel qu'illustrée figure 17bis, pour laisser entrer le faisceau pompe initial Fpini. La première arête d1 et la deuxième arête d2 sont perpendiculaires à Z et présentent dans un plan XY un angle non nul $\alpha$ entre elles. Du fait de l'absence des grandes lentilles, les faisceaux pompe élémentaires sont incidents sur le cristal selon un angle nul, et leurs points d'impact sont répartis spatialement sur la face du cristal. Préférentiellement les composants RCO1 et RCO2 sont configurés pour générer des faisceaux élémentaires présentant des points d'impacts sur une face du cristal répartis sur un cercle.

Selon un mode de réalisation le dispositif optique DO comprend en outre des petites lentilles 20 disposées sur chaque trajet des faisceaux pompe élémentaires.

Les lentilles sont disposées de chaque côté du cristal CR et en configuration afocale. Leurs focales sont typiquement comprises entre 20 et 70 mm.

Ces lentilles focalisent le faisceau dans le cristal pour compenser la divergence naturelle du faisceau laser. Le diamètre des lentilles est adapté à la taille d'un faisceau pompe élémentaire et au nombre de faisceaux pompe élémentaires parallèles se propageant dans la cavité.

Si le faisceau laser est assez grand (typiquement 1,3 mm de diamètre à $\lambda = 1 \ \mu m$), la divergence est faible et ces lentilles sont facultatives.

La figure 19 est ici toujours valable (exemple 6 et 8 faisceaux) et des configurations 2, 4, 10, 12... faisceaux sont possibles de la même manière. En présence des petites lentilles, le trajet des faisceaux pompe élémentaires dans le système est légèrement modifié, et la figure 18 n'est plus valable. Elle est remplacée par la figure 25 qui décrit le trajet du faisceau pompe dans la cavité.

Selon un mode de réalisation illustré figure 26 les deux bi-miroirs ROC1, ROC2 possèdent respectivement une ouverture T1, T2 en leur centre de manière à ajouter un faisceau pompe élémentaire présentant un point d'impact localisé au centre du cercle. La configuration s'apparente à celle de la figure 20. Cela permet de compléter efficacement la surface du cristal pompée. Sur l'exemple de la figure 26, l'ouverture T2 injecte le faisceau pompe initial dans la cavité, puis le faisceau pompe ressort par T1 et est réfléchi par le système de miroirs 62 en sortie du T1, puis re-rentre dans le système par une encoche H dans ROC1. L'ouverture T1 permet, combinée à au système de miroirs 62, de rediriger le faisceau pompe 63 dans la cavité. Le faisceau pompe 63 constitue alors un faisceau pompe élémentaire incident sur le cristal selon un point d'impact central.

En plus des points d'impact répartis sur un cercle, cette configuration permet de générer un faisceau pompe élémentaire présentant un point d'impact sur le centre du cercle, comme illustré figure 27, qui décrit le trajet du faisceau pompe dans la cavité pour ce mode de réalisation.

Cette configuration permet d'augmenter la surface du cristal pompée, ce qui augmente la résolution des images. En effet, l'image étant convertie dans le plan de Fourier, les basses fréquences spatiales de l'image sont situées proches de l'axe optique (défini par le point d'impact selon le centre du cercle) et les hautes fréquences spatiales sont éloignées de l'axe optique et peuvent donc être converties seulement par de gros faisceaux pompe. En outre, pour une résolution donnée, la puissance de pompe nécessaire est divisée par le nombre de passages du faisceau pompe dans le cristal.

Les gains obtenus en terme de résolution d'images sont illustrés figure 28. L'image 40 représente un exemple d'image Im à convertir. La ligne supérieure d'images représente la répartition spatiale de l'intensité du faisceau pompe 63 à l'intérieur du cristal CR pour différentes configurations du faisceau pompe Config1, Config2, Config3 et Config4.

La ligne inférieure d'images représente les images converties Ic(1), Ic(2), Ic(3) et Ic(4) avec les pompes correspondantes.

Config 1 et config 2 correspondent à un faisceau gaussien simple passage tel que réalisé dans les systèmes actuels. Le rayon ou « waist » du faisceau pompe est de 170 $\mu m$ pour Config1 et de 450 $\mu m$ pour Config2. On observe sur l'image convertie Ic(2) un gain important en résolution par rapport à Ic(1). Du fait de l'unicité de la pompe, le système se comporte, par rapport à l'image Im, comme un filtre passe bas (en fréquences spatiales).

Config 3 illustre la configuration de la figure 25 avec des « waists » pour chaque faisceau pompe élémentaire de 170 $\mu m$ de rayon et une distance entre 2 faisceaux pompes élémentaires adjacents de 450 $\mu m$. L'image converti Ic(3) ne ressemble pas très bien à l'image initiale car il manque le faisceau de pompe au centre, qui permet de convertir les basses fréquences spatiales, mais on constate que les hautes fréquences spatiales ont été converties. Le système se comporte ici comme un filtre passe haut.

Config 4 représente la configuration correspondant à la figure 27 avec là encore des waist de faisceaux de 170 $\mu m$, espacés de 450 $\mu m$. L'image convertie Ic(4) possède une résolution comparable à celle de Ic(2). La puissance de pompe totale nécessaire pour convertir le signal incident est 7 fois plus faible dans Config4 que dans Config2 pour des performances en termes d'efficacité de conversion et de résolution très similaires. Le système permet ici une conversion à la fois des basses et des hautes fréquences de l'image Im.

## Revendications

1. Système (10) de conversion de fréquence apte à générer au moins un faisceau converti (Fc) présentant une fréquence convertie (vc) à partir d'au moins un faisceau signal (Fs) présentant une fréquence signal (vs), en utilisant une pluralité de n faisceaux pompe élémentaires $F_{p,i}$ indicés i, i variant de 1 à n, n supérieur ou égal à 2, présentant une fréquence pompe (vp),

le système comprenant :

- un cristal (CR) comprenant un matériau (M) dont le signe du coefficient non linéaire d'ordre 2 ($\chi^{(2)}$) est

inversé périodiquement le long d'un axe Z, ledit cristal étant configuré de sorte que la conversion s'opère par effet non linéaire d'ordre 2 dans ledit cristal,
- un dispositif optique (DO) configuré pour générer ladite pluralité de n faisceaux pompe élémentaires à partir d'un faisceau pompe initial (Fpini), un faisceau pompe élémentaire $F_{p,i+1}$ d'indice i+1 étant généré par redirection vers le cristal du faisceau pompe élémentaire $F_{p,i}$ d'indice i après sa traversée du cristal,

le dispositif optique (DO) comprenant un premier composant optique (ROC1) et un deuxième composant optique (ROC2) disposés de part et d'autre du cristal (CR), lesdits premier et deuxième composants optiques étant configurés pour réfléchir au moins en partie la pluralité de faisceaux pompe élémentaires,
le premier composant optique (ROC1) comprenant deux miroirs (M1, M'1) plans perpendiculaires entre eux et jointifs selon une première arête (d1), et le deuxième composant optique (ROC2) comprenant deux miroirs plans (M2, M'2) perpendiculaires entre eux et jointifs selon une deuxième arête (d2), les première et deuxième arêtes (d1, d2) étant perpendiculaires à Z et présentent dans un plan XY un angle non nul $(\alpha)$ entre elles.

- le cristal (CR) et le dispositif optique (DO) étant configurés de sorte qu'au moins un faisceau pompe élémentaire, un faisceau signal et un faisceau converti vérifient une condition de quasi-accord de phase lors de leur propagation dans ledit cristal selon un sens de propagation,

le dispositif optique (DO) étant ainsi configuré de sorte que la pluralité de n faisceaux pompe élémentaires sont parallèles entre eux.

2. Système de conversion selon la revendication 1 dans lequel le premier (ROC1) et le deuxième (ROC2) composant optique sont configurés de manière à générer des faisceaux pompe élémentaires présentant des points d'impact sur des faces du cristal répartis sur un cercle.

3. Système de conversion selon la revendication 2 dans lequel le premier (ROC1) et le deuxième (ROC2) composant optique présentent respectivement une première (T1) et une deuxième (T2) ouverture centrale de manière à ajouter auxdits faisceaux pompe élémentaires présentant des points d'impact répartis sur un cercle un faisceau pompe élémentaire présentant un point d'impact localisé au centre dudit cercle.

4. Système de conversion selon l'une des revendications précédentes dans lequel le faisceau signal présente une longueur d'onde dans l'infra rouge, et le faisceau converti présente une longueur d'onde inférieure dans l'infra rouge proche ou dans le visible.

## Patentansprüche

1. Frequenzumwandlungssystem (10), das mindestens einen umgewandelten Strahl (Fc) mit einer umgewandelten Frequenz (vc) aus mindestens einem Signalstrahl (Fs) mit einer Signalfrequenz (vs) unter Verwendung einer Vielzahl von elementaren Pumpstrahlen $F_{p,i}$ mit Index i erzeugen kann, wobei i von 1 bis n variiert und n gleich oder größer 2 ist, die eine Pumpfrequenz (vp) aufweisen,

wobei das System Folgendes umfasst:

- einen Kristall (CR), der ein Material (M) umfasst, bei dem das Vorzeichen des nichtlinearen Koeffizienten der Ordnung 2 $(\chi^{(2)})$ entlang einer Z-Achse periodisch umgekehrt ist, wobei der Kristall so konfiguriert ist, dass die Umwandlung durch einen nichtlinearen Effekt der Ordnung 2 in dem Kristall erfolgt,
- eine optische Vorrichtung (DO), die zum Erzeugen der Vielzahl von n elementaren Pumpstrahlen aus einem anfänglichen Pumpstrahl (Fpini) konfiguriert ist, wobei ein elementarer Pumpstrahl $F_{p,i+1}$ mit einem Index i+1 durch Umlenken des elementaren Pumpstrahls $F_{p,i}$ mit Index i zum Kristall erzeugt wird, nachdem er den Kristall durchquert hat,

wobei die optische Vorrichtung (DO) eine erste optische Komponente (ROC1) und eine zweite optische Komponente (ROC2) umfasst, die auf beiden Seiten des Kristalls (CR) angeordnet sind, wobei die erste und die zweite optische Komponente zum Reflektieren mindestens eines Teils der Vielzahl von elementaren Pumpstrahlen konfiguriert sind,
wobei die erste optische Komponente (ROC1) zwei lotrecht zueinander stehende Planspiegel (M1, M'1) umfasst, die entlang einer ersten Kante (d1) aneinander stoßen, und wobei die zweite optische Komponente (ROC2) zwei lotrecht zueinander stehende Planspiegel (M2, M'2) umfasst, die entlang einer zweiten Kante (d2) aneinander stoßen, wobei die erste und die zweite Kante (d1, d2) lotrecht zu Z stehen und in einer XY-Ebene einen Winkel (α) von ungleich Null zwischen sich aufweisen,

- wobei der Kristall (CR) und die optische Vorrichtung (DO) so konfiguriert sind, dass mindestens ein elementarer Pumpstrahl, ein Signalstrahl und ein umgewandelter Strahl eine Quasi-Phasenübereinstimmungsbedingung verifizieren, wenn sie sich in dem Kristall in einer Ausbreitungsrichtung ausbreiten,

wobei die optische Vorrichtung (DO) so konfiguriert ist, dass die Vielzahl von n elementaren Pumpstrahlen parallel zueinander ist.

2. Umwandlungssystem nach Anspruch 1, wobei die erste (ROC1) und die zweite (ROC2) optische Komponente so konfiguriert sind, dass sie elementare Pumpstrahlen erzeugen, die Auftreffpunkte auf Flächen des Kristalls aufweisen, die über einen Kreis verteilt sind.

3. Umwandlungssystem nach Anspruch 2, wobei die erste (ROC1) und die zweite (ROC2) optische Komponente jeweils eine erste (T1) und eine zweite (T2) zentrale Apertur aufweisen, um den elementaren Pumpstrahlen, die über einen Kreis verteilte Auftreffpunkte aufweisen, einen elementaren Pumpstrahl hinzuzufügen, der einen Auftreffpunkt aufweist, der in der Mitte des Kreises lokalisiert ist.

4. Umwandlungssystem nach einem der vorhergehenden Ansprüche, wobei der Signalstrahl eine Wellenlänge im Infrarotbereich aufweist und der umgewandelte Strahl eine geringere Wellenlänge im nahen Infrarot- oder im sichtbaren Bereich aufweist.

## Claims

1. A frequency conversion system (10) capable of generating at least one converted beam (Fc) having a converted frequency (vc) from at least one signal beam (Fs) having a signal frequency (vs), using a plurality of n elementary pump beams $F_{p,i}$, indexed i, with i varying from 1 to n, with n being greater than or equal to 2, having a pump frequency (vp),

the system comprising:

- a crystal (CR) comprising a material (M), the sign of which for the second order non-linear coefficient ($\chi^{(2)}$) is periodically inverted along an axis Z, with said crystal being configured so that the conversion occurs by means of a second order non-linear effect in said crystal,
- an optical device (OD) configured to generate said plurality of n elementary pump beams from an initial pump beam (Fpini), with an elementary pump beam $F_{p,i+1}$, indexed i+1, being generated by redirecting the elementary pump beam $F_{p,i}$, indexed i, towards the crystal after it has passed through the crystal,

the optical device (DO) comprising a first optical component (ROC1) and a second optical component (ROC2) disposed on either side of the crystal (CR), with said first and second optical components being configured to at least partially reflect the plurality of elementary pump beams, the first optical component (ROC1) comprising two flat mirrors (M1, M' 1) perpendicular to one another and joined along a first edge (d1), and the second optical component (ROC2) comprising two flat mirrors (M2, M'2) perpendicular to each other and joined along a second edge (d2), with the first and second edges (d1, d2) being perpendicular to Z and having a non-zero angle (α) between them in an XY plane,

- the crystal (CR) and the optical device (DO) being configured so that at least one elementary pump beam, a signal beam and a converted beam fulfil a quasi-phase-matching condition when propagating in said crystal in a direction of propagation,

the optical device (DO) thus being configured so that the plurality of n elementary pump beams are parallel to each other.

2. The frequency conversion system according to claim 1, wherein the first (ROC1) and the second (ROC2) optical component are configured so as to generate elementary pump beams having points of impact on faces of the crystal distributed over a circle.

3. The frequency conversion system according to claim 2, wherein the first (ROC1) and the second (ROC2) optical component respectively have a first (T1) and a second (T2) central opening so as to add, to said elementary pump beams having points of impact distributed over a circle, an elementary pump beam having a point of impact located at the centre of said circle.

4. The frequency conversion system according to any of the preceding claims, wherein the signal beam has a wavelength in the infrared domain, and the converted beam has a lower wavelength in the near infrared domain or in the visible domain.

FIG.1

FIG.2

FIG.3

FIG.4

FIG.5

FIG.6

FIG.7

EP 3 679 424 B1

FIG.8a

FIG.8b

FIG.9

FIG.10

FIG.11

FIG.12

FIG.13

FIG.14

EP 3 679 424 B1

FIG.15

FIG.16

FIG.17

FIG.17bis

FIG.18

FIG.19a

FIG.19b

EP 3 679 424 B1

**FIG.20**

FIG.21

FIG.22

FIG.23

FIG.25

FIG.24

EP 3 679 424 B1

FIG.26

FIG.27

FIG.28

## RÉFÉRENCES CITÉES DANS LA DESCRIPTION

**Documents brevets cités dans la description**

- US 13054420 B
- US 2011170172 A
- JP 2008224932 A
- WO 2014051573 A
- EP 1252687 A

**Littérature non-brevet citée dans la description**

- **J.A ARMSTRONG et al.** Interactions between light waves in a non linear dielectric. *Physical Review,* 1962, vol. 127 (6), 1918-1939